(19)

Europäisches
Patentamt
European
Patent Office
Office européen
des brevets

(11)   **EP 4 773 363 A1**

(12)   **EUROPEAN PATENT APPLICATION**
published in accordance with Art. 153(4) EPC

(43) Date of publication:
08.07.2026  Bulletin 2026/28

(21) Application number: 24863023.8

(22) Date of filing: 30.07.2024

(51) International Patent Classification (IPC):
*H01M 50/169* (2021.01)    *H01M 50/148* (2021.01)
*H01M 50/15* (2021.01)    *H01M 50/209* (2021.01)

(52) Cooperative Patent Classification (CPC):
H01M 50/148; H01M 50/15; H01M 50/169;
H01M 50/209; Y02E 60/10

(86) International application number:
PCT/KR2024/011128

(87) International publication number:
WO 2025/053441 (13.03.2025 Gazette 2025/11)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  05.09.2023  KR 20230117496

(71) Applicant: **SK On Co., Ltd.**
**Seoul 03161 (KR)**

(72) Inventors:
• **KWAK, Seung Ho**
  **Daejeon 34124 (KR)**
• **CHEONG, Hoemin**
  **Daejeon 34124 (KR)**
• **JU, Seung Hoon**
  **Daejeon 34124 (KR)**

(74) Representative: **Prüfer & Partner mbB**
**Patentanwälte · Rechtsanwälte**
**Sohnckestraße 12**
**81479 München (DE)**

(54)   **BATTERY CELL, MANUFACTURING METHOD THEREFOR AND BATTERY ASSEMBLY
COMPRISING SAME**

(57)     A battery cell manufacturing method of the present disclosure comprises: an insertion step of inserting a cap part into an opening; and a connection step of irradiating a laser at the cap part and a body part so as to connect the cap part to the body part, wherein, a welding bead for connecting the cap part to the body part is formed in the connection step, and the welding bead can satisfy formula 1. (Formula 1) $T \leq D$ (In formula 1, D is the thickness of a welding bead with respect to the cross-section of a battery cell in the thickness direction of a cap part, and T is the thickness of the cap part.)

FIG. 1

```
        ┌───────────┐
        │   Start   │
        └───────────┘
              │
              ▼
    ┌───────────────────┐
    │  Insertion step   │──── S10
    └───────────────────┘
              │
              ▼
    ┌───────────────────┐
    │  Connection step  │──── S30
    └───────────────────┘
              │
              ▼
        ┌───────────┐
        │    End    │
        └───────────┘
```

## Description

**[Field]**

The present disclosure relates to battery cell, a method for manufacturing the same, and a battery assembly including the same. More particularly, the present disclosure relates to a battery cell with improved stability and performance, a method for manufacturing the same, and a battery assembly including the same.

**[Background technology]**

A secondary battery is a battery that converts electrical energy into chemical energy and stores the chemical energy, and is reusable multiple times through charging and discharging. Secondary batteries are widely used in various industries due to their cost-effective and eco-friendly characteristics. In particular, lithium secondary batteries are widely utilized across industries, including mobile devices that require high energy density.

During the manufacturing of a secondary battery, components may be connected to each other by welding. The welding method can significantly affect the stability and performance of the secondary battery. In addition, when a plurality of secondary batteries are grouped together, it is necessary to consider the shape of a weld bead to maximize space efficiency.

**[Detailed Description of the Invention]**

**[Technical Problem]**

An aspect of the present disclosure is to provide a battery cell having improved stability and performance, a method for manufacturing the same, and a battery assembly including the same.

Further, an aspect of the present disclosure is to provide a battery cell, in which post-processing of a weld bead is omitted to improve manufacturing efficiency, a method for manufacturing the same, and a battery assembly including the same.

In addition, the present disclosure may be widely applied in electric vehicles, battery charging stations, and other green technologies such as solar power generation and wind power generation that utilize batteries.

Furthermore, the present disclosure may be used in eco-friendly electric vehicles and hybrid vehicles to prevent climate change by suppressing air pollution and greenhouse gas emissions.

**[Technical solutions]**

The present disclosure provides a method for manufacturing a battery cell that includes a body unit configured to accommodate a battery cell therein and including an opening that is open at one side; and a cap unit configured to cover the opening, including a bottom surface facing the battery cell and a top surface facing outward, and including a recess formed by recessing at least a portion of an edge of the top surface,

the method including: an insertion step of inserting the cap unit into the opening; and a connection step of connecting the cap unit and the body unit by irradiating the cap unit and the body unit with laser, wherein, in the connection step, a weld bead is formed connecting the cap unit and the body unit, and the weld bead satisfies Equation 1 below.

### (Equation 1)

$$T \leq D$$

(In Equation 1, D denotes a thickness of the weld bead based on a cross-section of the battery cell in a thickness direction of the cap unit, and T denotes a thickness of the cap unit).

In the connection step, the weld bead may be located inward of an outer surface of the body unit and inward of the top surface.

In the connection step, Equation 2 below may be satisfied.

### (Equation 2)

$$B \leq A \leq 4B$$

(In Equation 2, A denotes a cross-sectional area of the weld bead based on a cross-section of the battery cell in the thickness direction of the cap unit, and B denotes a cross-sectional area of a corner region formed by the outer surface of the body unit, the top surface, and the weld bead).

The A may be 1.5B to 3.5B.

In the insertion step, Equation 3 below may be satisfied.

### (Equation 3)

$$F \leq P/Q$$

(In Equation 3, F denotes an overlap length in which the recess and the body unit overlap along the thickness direction of the cap unit with respect to the cross-section of the battery cell in the thickness direction of the cap unit, and P denotes a cross-sectional area of the recess, and Q denotes a thickness of the body unit).

The recess may include a step formed along the thickness direction of the cap unit.

The step may have a width of 0.3 mm to 1 mm and a height of 0.2 mm or less.

The recess may have a sloped surface along the thickness direction of the cap unit.

The body unit may include a stopper formed along an inner surface thereof to come into contact with the bottom surface of the cap unit.

Further, the present disclosure provides a battery cell including: a body unit configured to accommodate a battery cell therein and including an opening that is open at one side; and a cap unit configured to cover the opening by being inserted at least partially into the opening, wherein the body unit and the cap unit are connected to each other by a weld bead, and the weld bead satisfies Equation 1 below.

$$\text{(Equation 1)}$$

$$T \leq D$$

(In Equation 1, D denotes a thickness of the weld bead based on a cross-section of the battery cell in a thickness direction of the cap unit, and T denotes a thickness of the cap unit).

The weld bead may be located inward of an outer surface of the body unit and inward of the top surface of the cap unit.

The weld bead may satisfy Equation 2 below.

$$\text{(Equation 2)}$$

$$B \leq A \leq 3.5B$$

(In Equation 2, A denotes a cross-sectional area of the weld bead based on a cross-section of the battery cell in the thickness direction of the cap unit, and B denotes a cross-sectional area of a corner region formed by the outer surface of the body unit, the top surface, and the weld bead).

The A may be 1.5B to 3B.

The cap unit may include a different material from the body unit.

The body unit may include a stopper formed along an inner surface thereof to come into contact with the bottom surface of the cap unit.

Further, the present disclosure provides a battery assembly including the battery cell.

**[Effect]**

According to an embodiment of the present disclosure, a battery cell and a battery cell manufacturing method having improved stability and performance can be provided.

Furthermore, the present disclosure may provide a battery cell and a battery cell manufacturing method in which post-processing of a weld bead is omitted, thereby improving manufacturing efficiency.

**[Description of the drawing]**

FIG. 1 is a flowchart illustrating a battery cell manufacturing method according to an embodiment of the present disclosure.

FIGS. 2 and 3 illustrate a battery cell according to an embodiment of the present disclosure.
FIGS. 4 and 5 illustrate other examples of the battery cell according to the present disclosure.
FIGS. 6A and 6B illustrate a body unit and a cap unit according to an embodiment of the present disclosure.
FIGS. 7A and 7B illustrate a body unit and a cap unit according to another embodiment of the present disclosure.
FIGS. 8 and 9 illustrate a weld bead according to an embodiment of the present disclosure.
FIGS. 10A to 10E illustrate various embodiments of a weld bead according to the present disclosure.
FIG. 11 illustrates the area of a weld bead and an edge region according to various embodiments of the present disclosure.
FIGS. 12 and 13 illustrate various embodiments of a battery assembly of the present disclosure.

**[Embodiments]**

Hereinafter, the present disclosure will be described in detail with reference to the accompanying drawings. However, this is exemplary only and do not limit the present disclosure to the specific embodiments described.

Certain terms used herein are for convenience of description only and are not intended to be limiting to the exemplary embodiments.

For example, expressions such as "identical" and "identical to" refer not only to strictly identical states, but also to states in which tolerances or differences in the degree to which the same function is achieved are present.

For example, expressions that indicate a relative or absolute placement, such as "in a direction", "along a direction", "side by side", "perpendicular", "centered", "concentric", or "coaxial", not only strictly indicate such a placement, but also indicate states in which relative displacement exists with a tolerance or with an angle or distance such that the same function is obtained.

To describe the present disclosure, the following description is based on a spatial Cartesian coordinate system with the X, Y, and Z axes orthogonal to each other. Each axial direction (X-axis direction, Y-axis direction, Z-axis direction) refers to both directions in which the respective axis extends.

The following references to the X-, Y-, and Z-directions are for the purpose of facilitating a clear understanding of the present disclosure, although it is possible to define these directions differently depending on where the reference is set.

As used herein, singular expressions include the plural unless the context clearly indicates otherwise.

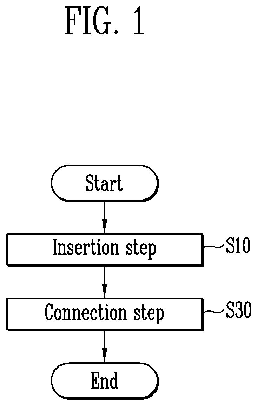

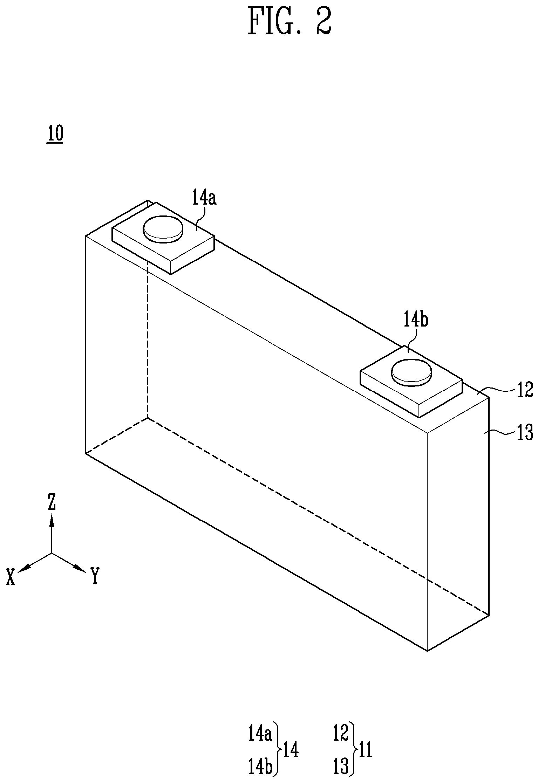

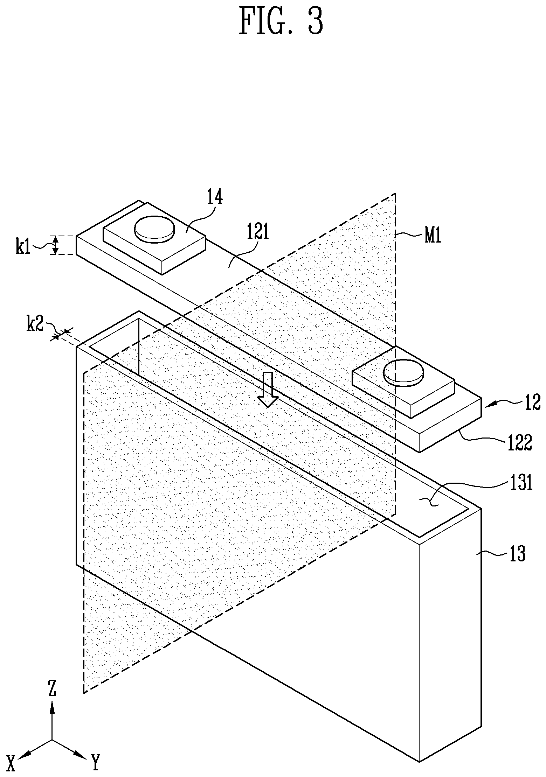

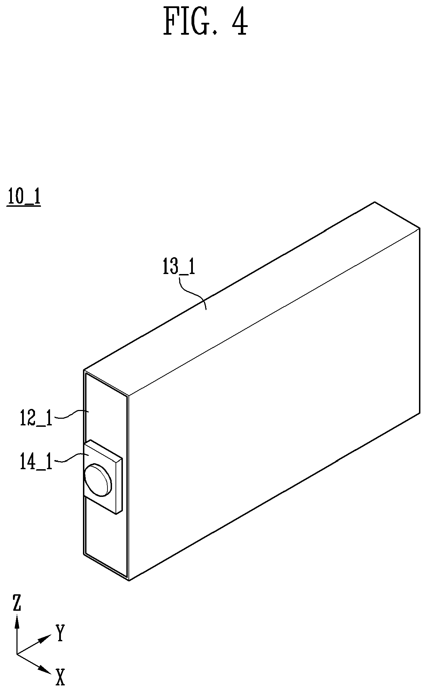

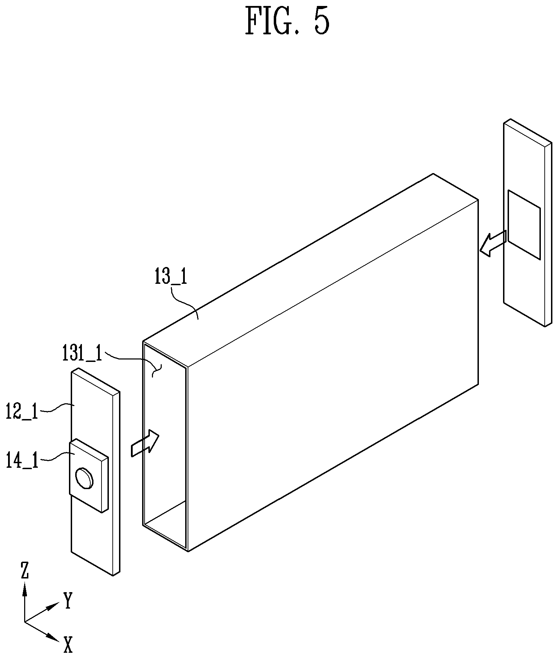

FIG. 1 is a flowchart illustrating a battery cell manufacturing method according to an embodiment of the present disclosure, FIGS. 2 and 3 illustrate a battery cell 10 according to an embodiment of the present disclosure, and FIGS. 4 and 5 illustrate other examples of the battery cell 10 according to the present disclosure.

Referring to FIG. 1, a method for manufacturing a battery cell according to an embodiment of the present disclosure includes an insertion step (S10) and a connection step (S30). Referring to FIG. 2, the battery cell 10 may include a shell 11, and the outer case 11 may include a body unit 13 and a cap unit 12. The body unit 13 may include an opening 131 open at one side.

The battery cell manufacturing method of the present disclosure may include an insertion step (S10) of inserting the cap unit 12 into the opening. The insertion step (S10) will be described in more detail below with reference to FIGS. 2 to 5.

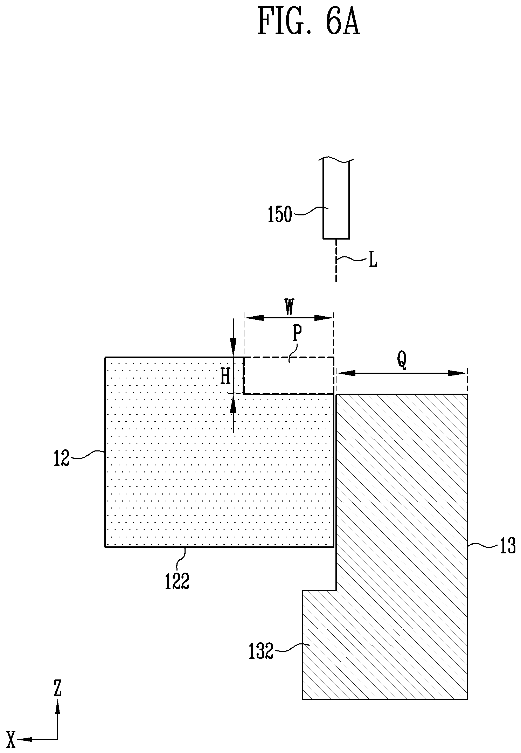

After the insertion step (S10), the connection step (S30) may be carried out. The battery cell manufacturing method of the present disclosure may include the connection step (S30), wherein the cap unit 12 and the body unit 13 are connected by irradiating laser L onto the cap unit 12 and the body unit 13. The connection step (S30) may be performed by irradiating the laser L under the supply of the laser L. The connection step (S30) will be described in more detail below with reference to FIGS. 6A to 9.

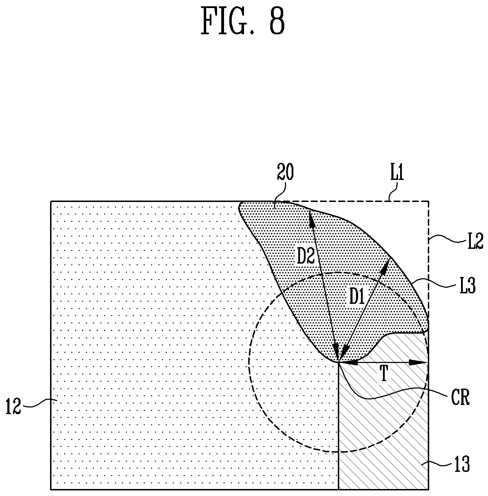

By irradiating the laser L, a weld bead (20 in FIG. 8) connecting the cap unit 12 and the body unit 13 may be formed. The weld bead 20 may be formed by at least a portion of the cap unit 12 and the body unit 13 being melted and solidified. The weld bead 20 will be described in more detail below with reference to FIGS. 8 to 11.

The battery cell 10 described herein refers to a secondary battery that can be used repeatedly by charging and discharging electrical energy. For example, the battery cell 10 may be a lithium secondary battery or a lithium ion battery, but is not limited thereto. In another example, the battery 10 may be an all-solid-state battery.

The battery cell 10 may be classified into a pouch-type secondary battery, a prismatic secondary battery, or a cylindrical secondary battery according to its shape. In this specification, the prismatic secondary battery is illustrated as an example for convenience of description, but is not limited thereto.

The battery cell 10 may include an electrode assembly. The electrode assembly may include a positive electrode, a negative electrode, and a separator. The electrode assembly may be categorized as a stacking type, a winding type, stack-folding type, or Z-stacking type depending on how the positive electrode, negative electrode, and separator are stacked. The battery cell 10 of the present disclosure may include electrode assemblies stacked in various ways without being limited to any one stacking method.

The positive and negative electrodes may include collectors. The positive electrode may include a positive electrode collector, and the negative electrode may include a negative electrode collector. The collector may include any known conductive material, provided that it does not cause a chemical reaction within the lithium secondary battery. For example, the collector may include any of stainless steel, nickel (Ni), aluminum (Al), titanium (Ti), copper (Cu), and alloys thereof, and may be provided in various forms, such as a film, a sheet, a foil, and the like.

The positive and negative electrodes can include an active material. The positive electrode may include a positive electrode active material and the negative electrode may include a negative electrode active material. The positive electrode active material may be a material that intercalates and deintercalates lithium ions, and the negative electrode active material may be a material that occludes and releases lithium ions. For example, the positive electrode active material may be a lithium metal oxide, and the negative electrode active material may be any one of crystalline carbon, amorphous carbon, carbon-based materials such as carbon composites, carbon fibers, lithium alloys, silicon (Si), and tin (Sn).

Each of the positive and negative electrodes may further include a binder and a conductive material for improved mechanical stability and electrical conductivity.

The separator may be configured to prevent electrical short circuits between the positive and negative electrodes and to allow the flow of ions. The type of separator is not particularly limited, and may include a porous polymeric film. For example, the separator may include a porous polymeric film or a porous nonwoven fabric.

An electrolyte may include an electrolyte solution. The electrolyte solution may be a non-aqueous electrolyte solution. The electrolyte solution may include a lithium salt and an organic solvent. The electrolyte may further include an additive. The additive may form a film on the positive electrode or the negative electrode through a chemical reaction inside the battery. For example, a positive electrode interfacial film may be formed on the positive electrode and a negative electrode film may be formed on the negative electrode.

The battery cell 10 may further include an outer case 11 that accommodates the electrode assembly therein. The electrode assembly and electrolyte may be accommodated within the outer case 11. The outer case 11 may include an outer insulating layer and an inner adhesive layer made of a polymer material, and a metal layer interposed between the outer insulating layer and the inner adhesive layer. The outer case 11 may include a material with high mechanical rigidity to protect the battery cell 10 from external impact. For example, the outer case 11 may include an aluminum layer.

The battery cell 10 may further include electrode tabs 14 that protrude outside of the outer case 11 for electrical connection to the outside. The electrode tabs 14 may be connected to the positive and negative electrodes of the battery cell 10. The electrode tabs 14 may include a positive electrode tab 14a connected to the positive electrode and a negative electrode tab 14b connected to the negative electrode.

Referring to FIGS. 2 and 3, the outer case 11 may include a body unit 13 and a cap unit 12. The body unit 13 may accommodate a battery cell 10 therein. The battery cell 10 may be inserted into the body unit 13. To this end, the body unit 13 may include an opening 131 open at one side. The body unit 13 may include an opening 131 that is open at at least one side.

Referring to FIGS. 2 and 3, in the case of a unidirectional battery cell 10 in which the positive electrode tab and the negative electrode tab protrude in the same direction, one side of the body unit 13 facing the Z-direction may be open to form an opening 131.

Referring to FIGS. 4 and 5, in the case of a bidirectional battery cell 10_1 in which the positive electrode tab and the negative electrode tab protrude in opposite directions, both sides of the body unit 13_1 facing the Z direction may be open to form openings 131_1. In other words, electrode tabs 14_1 may each protrude in opposite directions to each other.

The cap unit 12 may cover the opening 131. To this end, the cap unit 12 may be shaped to correspond to the opening 131. An outer surface of the cap unit 12 may be in contact with an inner surface of the body unit 13. The cap unit 12 and the body unit 13 may be coupled to protect components accommodated inside the body unit 13. The cap unit 12 may include a different material from the body unit 13.

Referring back to FIG. 3, the cap unit 12 may include a bottom surface 122 facing the battery cell 10 and a top surface 121 facing the outside. When the cap unit 12 and the body unit 13 are coupled, the bottom surface 122 may face the interior of the body unit 13, and the top surface 121 may be provided on the opposite side of the bottom surface 122.

The cap unit 12 may include a recess 120 formed by recessing at least a portion of an edge thereof. According to an embodiment, the recess 120 may be formed on the top surface 121. The recess 120 may be formed along an edge of the top surface 121. In other words, the recess 120 may be formed in an edge region of the top surface 121.

This is to form the weld bead 20 during welding in accordance with a predetermined condition. The recess 120 will be described in detail with reference to FIGS. 6A to 9.

On the other hand, the opening 131 provided in the body unit 13 may be covered by the cap unit 12. At least a portion of the cap unit 12 may be inserted into the body unit 13. To this end, the size of the cap unit 12 may be formed smaller than the size of the opening 131. For example, referring to FIG. 3, the lengths of the cap unit 12 in the X- and Y- directions may be less than or equal to the lengths of the opening 131 in the respective directions.

When a plurality of openings 131 are provided, a plurality of cap units 12 may be provided to correspond to the openings 131, respectively. For example, referring to FIG. 5, the body unit 13_1 may include the openings 131_1 that are open on both sides along the Y-direction. Two cap units 12_1 may be provided to cover the two openings 131_1.

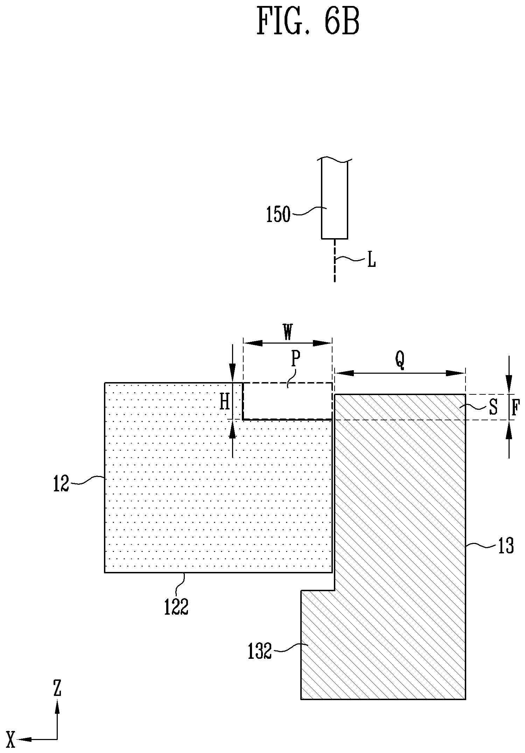

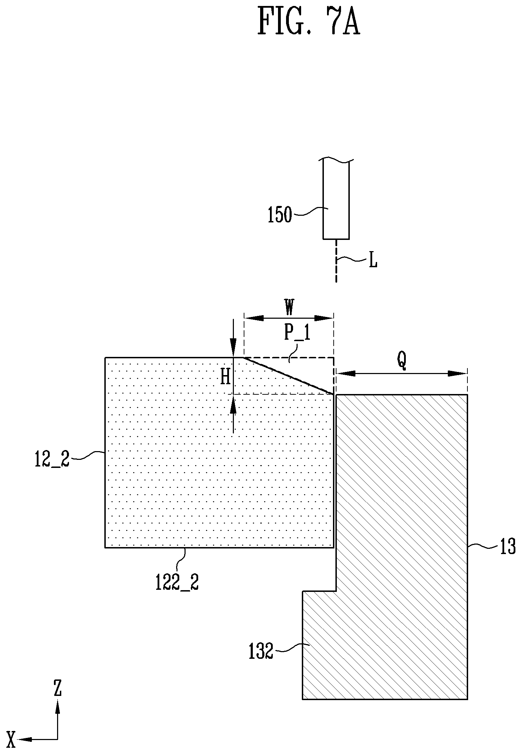

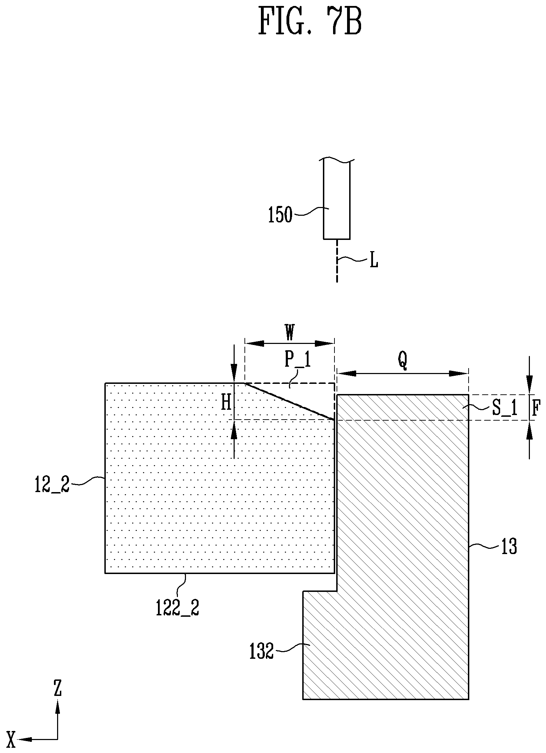

FIGS. 6A and 6B illustrate the body unit 13 and the cap unit 12 according to an embodiment of the present disclosure, and FIGS. 7A and 7B illustrate the body unit 13 and a cap unit 12_2 according to another embodiment of the present disclosure.

The cap unit 12 (or 12_2 in FIG. 7A) and the body unit 13 may be coupled by irradiating the cap unit 12 and the body unit 13 with laser L. The laser L may be supplied by the welding system 150. In an embodiment, the laser L may be irradiated in a direction parallel to the contact surface of the cap unit 12 and the body unit 13. In another embodiment, the laser L may be irradiated in a direction inclined with respect to a contact surface between the cap unit 12 and the body unit 13. As long as the body unit 13 and the cap unit 12 can be connected to each other, the irradiation direction of the laser L is not particularly limited.

Specifically, FIGS. 6A and 6B illustrate the cross-sections of the body unit 13 and the cap unit 12. Here, FIGS. 6A and 6B may illustrate the cross-section cut along the thickness direction of the cap unit 12. Specifically, the cross-section of the battery cell 10 cut along the thickness direction of the cap unit 12 may refer to a cross-section cut by an imaginary first plane that is parallel to the thickness direction of the cap unit 12. Furthermore, the cross-section of the battery cell 10 may refer to a welded cross-section cut such that the area of the weld bead 20 is minimized.

As a practical example, the imaginary first plane may refer to an imaginary first plane parallel to the thickness direction k1 of the cap unit 12 and parallel to the thickness direction K2 of the body unit 13, as shown in the example shown of FIG. 3, and the cross-section of the battery cell 10 may refer to a cross-section cut by the imaginary first plane described above.

Referring to FIGS. 6A and 6B, the recess 120 may be a stepped structure formed along the thickness direction of the cap unit 12. The recess 120 may form a step along the edge. In other words, due to the recess 120, the thickness of the center of the cap unit 12 may be formed to be smaller than the thickness of the edge thereof. This is to prevent a portion of the body unit 13 from being melted and moved to the cap unit 12 during welding, thereby preventing the weld bead 20 from protruding above the cap unit 12.

In an embodiment, the cap unit 12 and the body unit 13 may be melted by irradiation with the laser L. The heat capacity of the cap unit 12 may be higher than that of the body unit 13. Accordingly, the body unit 13 may melt first, and a portion of the body unit 13 may move to the cap unit 12, thereby causing the weld bead 20 to protrude upward from the cap unit 12.

When the weld bead 20 protrudes, assembly errors, stacking errors, and the like may occur in the process of manufacturing a battery cell assembly (battery module or battery pack) in which a plurality of battery cells 10 are grouped. As a result, the energy density of the grouped battery cells (battery module or battery pack) may decrease, such that high-output and high-capacity conditions may not be satisfied.

Furthermore, when the body unit 13 and the cap unit 12 are simultaneously covered with an insulating member or an insulating member, the protrusion of the weld bead 20 may cause a non-contact space. Due to the non-contact space, adhesion may be reduced and the assemblability of the battery cell 10 may be deteriorated.

The method for manufacturing the battery cell according to the present disclosure may prevent the weld bead 20 from protruding in consideration of the shape of the body unit 13, the shape of the cap unit 12, and the insertion length of the cap unit 12, thereby providing the battery cell 10 having improved stability and enhanced performance.

On the other hand, the recess 120 may have a predetermined width and a predetermined height. The width of the recess 120 refers to the length of the recess 120 measured along a direction from an outer side toward an inner side of the cap unit 12. Further, the height of the recess 120 refers to the length of the recess 120 measured along the thickness direction of the cap unit 12. For example, referring to FIGS. 6A and 6B, the width W of the recess 120 may be measured in the X-direction and the height H of the recess 120 may be measured in the Z-direction.

Advantageously, the width of the step may be from 0.3 mm to 1 mm. The height of the step may be 0.2 mm or less. Accordingly, the weld bead 20 may be formed to meet preset specifications.

From the width and height of the recess 120, a cross-sectional area of the recess 120 may be measured. The measured cross-sectional area of the recess 120 may be compared to an area provided in a region of the body unit 13 to determine the insertion depth of the cap unit 12. In another example, the area of the recess 120 may be measured using known methods.

In an embodiment, the insertion step (S10) of the present disclosure may satisfy Equation 3 below. In other words, the body unit 13 and the cap unit 12 according to the present disclosure may satisfy Equation 3 below.

In an embodiment, when the body unit 13 and the cap unit 12 satisfy Equation 3 below, the weld bead 20 may satisfy Equations 1 and 2 (to be described later). However, this is not necessarily limited thereto.

<Equation 3>

$$F \leq P/Q$$

In Equation 3, F denotes an overlap length in which the recess 120 and the body unit 13 overlap along the thickness direction of the cap unit 12 with respect to a cross-section of the battery cell 10 taken in the thickness direction of the cap unit 12, P denotes a cross-sectional area of the recess 120, and Q denotes a thickness of the body unit 13.

Here, the unit of F may be mm, the unit of P may be mm$^2$, and the unit of Q may be mm.

Specifically, referring to FIGS. 6A and 6B, at least a portion of the cap unit 12 may be inserted into the body unit 13. The depth at which the cap unit 12 is inserted into the body unit 13 may be less than or equal to a predetermined depth. The depth at which the cap unit 12 is inserted into the body unit 13 may be correlated with the overlap length of the recess 120 and the body unit 13. Specifically, the deeper the cap unit 12 is inserted into the body unit 13, the greater the overlap length F between the recess 120 and the body unit 13 may be.

The depth at which the cap unit 12 is inserted into the body unit 13 may be derived based on the cross-sectional area P of the recess 120 and the protrusion area S of the body unit 13. Here, the protrusion area S of the body unit 13 may refer to the area in which the recess 120 and the body unit 13 overlap along the thickness direction of the body unit 13. In other words, the protrusion area S may refer to the area of the body unit 13 protruding along the thickness direction of the body unit 13 based on the region where the recess 120 is in contact with the body unit 13.

Depending on the depth at which the cap unit 12 is inserted, the protrusion area S of the body unit 13 may vary. Based on this, the protrusion area S of the body unit 13 may be calculated. As the cap unit 12 is inserted deeper into the inner side of the body unit 13, the area where the recess 120 and the body unit 13 overlap increases, thereby increasing the protrusion area S of the body unit 13.

Referring to FIG. 6B, the cross-sectional area P of the recess 120 is determined by the shape of the cap unit 12, and the protrusion area S of the body unit 13 may vary depending on the insertion depth of the cap unit 12. The cap unit 12 may be inserted until the protrusion area S of the body unit 13 is equal to the cross-sectional area P of the recess 120.

In an embodiment, the body unit 13 may have a predetermined thickness. The thickness of the body unit 13 may be a length of the body unit 13 along a direction from the inside of the cap unit 12 toward the outside. For example, referring to FIGS. 6A and 6B, the thickness Q of the body unit 13 may be a length of the body unit 13 along the X direction.

When the body unit 13 does not protrude as shown in FIG. 6A, the protrusion area of the body unit 13 may be zero. When the body unit 13 protrudes as shown in FIG. 6B, the overlap length between the recess 120 and the body unit 13 may be measured from a region being in contact with the recess 120. In a specific embodiment, the length of the body unit 13 protruding along the thickness direction of the cap unit 12 from the region where the recess 120 is in contact with the body unit 13 may be defined as the overlap length between the recess 120 and the body unit 13.

Based on the overlap length of the body unit 13 between the recess 120 measured using the above method and the thickness of the body unit 13, the protrusion area of the body unit 13 can be measured. However, the protrusion area of the body unit 13 is not limited thereto and may be measured using any method known in the art.

A range of protrusion lengths of the body unit 13 may be set. Ultimately, the overlap length between the recess 120 and the body unit 13 should be less than or equal to the cross-sectional area of the recess 120 divided by the thickness Q of the body unit 13.

The body unit 13 may include a stopper 132 to prevent excessive insertion of the cap unit 12. In other words, the stopper 132 may protrude from a preset region of the body unit 13 in accordance with the overlap length between the recess 120 and the body unit 13 to prevent the insertion of the cap unit 12. The stopper 132 may be formed along the inner surface of the body unit 13 so as to come into contact with the bottom surface 122 of the cap unit 12.

For example, referring to FIGS. 3 and 6A, the cap unit 12 may be inserted into the opening 131 in the Z-direction. In this case, the stopper 132 may be formed protruding along the inner surface of the body unit 13 to prevent insertion beyond a predetermined depth in the Z-direction.

The bottom surface 122 (or 122_2 in FIG. 7A) of the cap unit 12 may come into contact with the stopper 132, thereby restricting the insertion of the cap unit 12. Accordingly, the electrode assembly provided within the body unit 13 can be protected. In addition, the positions of the body unit 13 and the cap unit 12 can be easily adjusted.

In another embodiment, referring to FIGS. 7A and 7B, the recess 120 may have a sloped surface. Specifically, the recess 120 may have a sloped surface along the thickness direction of the cap unit 12_2. The edge of the recess 120 may form a slope such that the contacting surface of the body unit 13 and the sloped surface of the recess 120 form an acute angle.

Although the recess 120 includes an inclined surface, the insertion depth of the cap unit 12_2 can be determined by considering the area P_1 of the recess 120 and the protrusion area S_1 of the body unit 13 as described above. Based on this, a range of overlap lengths between the recess and the body unit may be calculated.

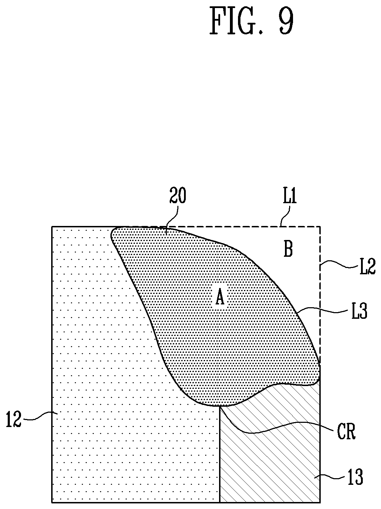

FIGS. 8 and 9 illustrate a weld bead 20 according to an embodiment of the present disclosure.

After the body unit 13 and the cap unit 12 are arranged at predetermined positions, the body unit 13 and the cap unit 12 may be coupled by the irradiation of the laser L. The irradiation of the laser L may form the weld bead 20 that connects the body unit 13 and the cap unit 12.

Referring to FIG. 8, the weld bead 20 may be formed between the cap unit 12 and the body unit 13. According to an embodiment, the weld bead 20 may satisfy Equation 1 below.

<Equation 1>

$$T \le D$$

(In Equation 1, D denotes the thickness of the weld bead 20 based on the cross-section of the weld bead 20 in the thickness direction of the cap unit 12, and T denotes the thickness of the cap unit 12).

Here, the units of D and T may be mm.

Equation 1 above may be particularly important when the body unit 13 and the cap unit 12 are made of different materials. That is, in dissimilar material welding, when T is greater than D in, the stability of the weld bead 20 may be reduced.

The thickness of the weld bead 20 may be greater than the thickness of the cap unit 12 in the direction of the thickness of the cap unit 12. The thickness of the weld bead 20 refers to the length from an intersection point CR, where the body unit 13, the cap unit 12, and the weld bead 20 meet, to the outer surface L3 of the weld bead 20.

The thickness of the weld bead 20 may increase as the intersection point moves farther away from the outer surface of the body unit 13. Similarly, the thickness of the weld bead 20 may increase as the intersection point moves farther away from the outer surface of the cap unit 12.

The thickness of the weld bead 20 may not be uniform. For example, referring to FIG. 8, the thickness of the weld bead 20 may refer to a distance from the intersection point to a first reference point provided on the outer surface L3 of the weld bead 20 or a distance from the intersection point to a second reference point provided on the outer surface L3 of the weld bead 20. In other words, the smallest value of the thickness of the weld bead 20 should be greater than the thickness of the cap unit 12.

When the thickness of the weld bead 20 is smaller than the thickness of the cap unit 12, the bond strength of the weld bead 20 may be low. That is, the durability of the weld bead 20 may be reduced, which may not reliably connect the body unit 13 and the cap unit 12 and may be easily damaged by external impact.

In an embodiment, the weld bead 20 may be located inward of the outer surface of the body unit 13 and inward of the top surface 121. Specifically, the weld bead 20 may be located inward of an imaginary plane that includes the outer surface of the body unit 13.

The weld bead 20 may be positioned inward of the outer surface of the body unit 13. Specifically, the weld bead 20 may be positioned inward of an imaginary line extending from an outer edge of the body unit 13 based on a cross-section of the battery cell 10 in the thickness direction of the cap unit 12. In other words, the weld bead 20 may not protrude beyond the body unit 13. For example, referring to FIG. 8, the weld bead 20 may be positioned closer to the interior of the body unit 13 than an imaginary line L2 extending along the Z-direction from an outer edge of the body unit 13.

The weld bead 20 may be positioned inward of the top surface 121. Specifically, the weld bead 20 may be positioned inward of an imaginary line L1 along which the top surface 121 extends based on a cross-section of the battery cell 10 in the thickness direction of the cap unit 12. In other words, the weld bead 20 may not protrude beyond the cap unit 12. For example, referring to FIG. 8, the weld bead 20 may be positioned closer to the interior of the body unit 13 than an imaginary line L1 extending from the top surface 121 along the X-direction.

Referring to FIG. 8, the weld bead 20 may be located inward of the outer surface of the body unit 13 and inward the top surface 121.

The thickness of the weld bead 20 described above may affect the cross-sectional area of the weld bead 20. Accordingly, in other embodiments, the weld bead 20 may satisfy Equation 2 below.

<Equation 2>

$$B \leq A \leq 4B$$

In Equation 2, A denotes the cross-sectional area of the weld bead 20 based on the cross-section of the weld bead in the thickness direction of the cap unit 12, and B denotes the cross-sectional area of the corner region formed by the outer surface of the body unit 13, the outer surface of the cap unit 12, and the weld bead 20.

Here, the units of A and B may be $mm^2$.

The cross-sectional area of the corner region may refer to the cross-sectional area of the region formed by an imaginary line extending from the outer edge of the body unit 13, an imaginary line extending from the top surface 121, and the weld bead 20.

For example, referring to FIG. 9, the corner region may refer to the region bounded by the imaginary line L1 extending from an outer edge of the body unit 13 along the Z-direction of, the imaginary line L2 extending from an outer edge of the top surface 121 along the X-direction, and the outer surface L3 of the weld bead 20.

When the cross-sectional area of the weld bead 20 is smaller than the cross-sectional area of the corner region, the performance of the weld bead 20 may not be guaranteed. Furthermore, when the cross-sectional area of the weld bead 20 exceeds 4B, various types of problems may occur, such as reduced weld strength, weld cracking, protrusion of the weld bead 20, etc. More preferably, A may satisfy 1.5B to 3.5B.

As a result, satisfying such a weld bead 20 cross-sectional area may lead to improved tensile strength and low contact resistance, which may result in excellent welding properties, and may exhibit constant welding properties that are substantially unaffected by the specific welding conditions.

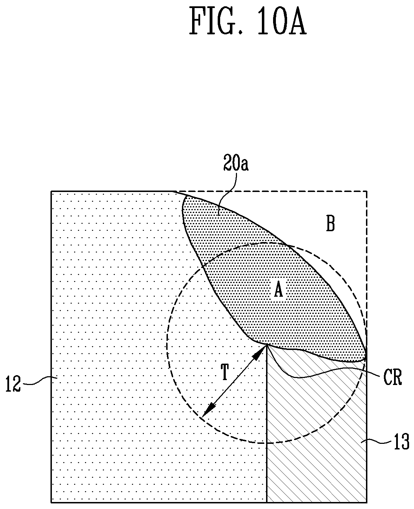

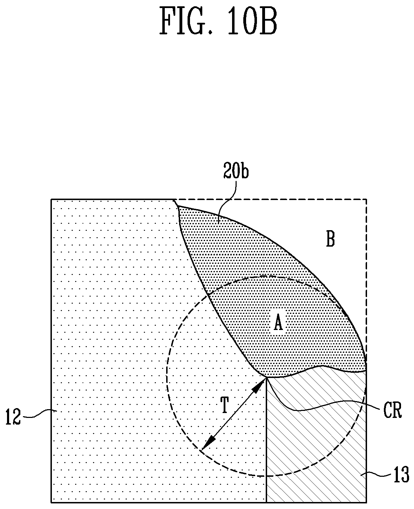

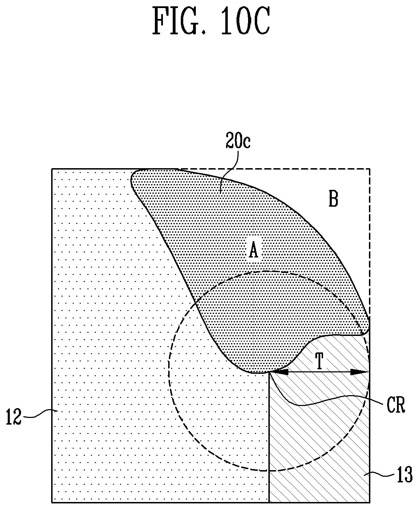

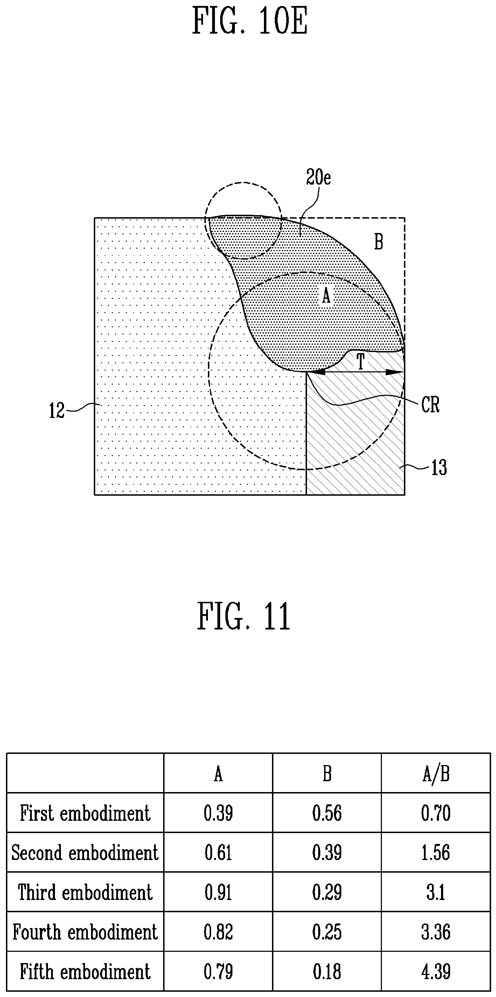

The weld bead 20 may simultaneously satisfy Equations 1 and 2 above. Whether Equations 1 and 2 are satisfied depending on the shape of the weld bead 20 will be described in detail below with reference to FIGS. 10A, 10B, and 11.

FIGS. 10A to 10E illustrate various embodiments of the weld bead 20 according to the present disclosure, and FIG. 11 illustrates the area of the weld bead 20 and the corner region according to various embodiments of the present disclosure.

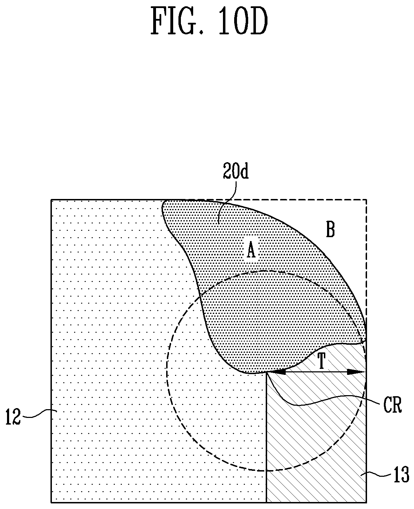

In FIG. 11, a first embodiment is shown in FIG. 10A, a second embodiment is shown in FIG. 10B, a third embodiment is shown in FIG. 10D, a fourth embodiment is shown in FIG. 10D, and a fifth embodiment is shown in FIG. 10E.

The first embodiment shows a weld bead 20a, the thickness of which is greater than the thickness of the cap unit 12. In this case, the area of a region A is 0.39 and the area of a region B is 0.56, so that A/B is measured as 0.70. Therefore, the weld bead 20a of the first embodiment does not satisfy Equation 1 nor Equation 2. In other words, the weld bead 20a of the first embodiment fails to meet the set specifications, and an inferior quality weld bead 20 is formed.

The weld beads 20b, 20c, and 20d of FIGS. 10B to 10D satisfy Equation 1. This results in ratios of A/B of 1.56, 3.1, and 3.36, which satisfy Equation 2. By satisfying both Equation 1 and Equation 2, the weld bead 20 with improved stability is formed.

The weld bead 20e of FIG. 10E satisfies Equation 1. However, the weld bead 20e may protrude beyond the top surface 121 of the cap unit 12. The value of A/B is 4.39, which does not satisfy Equation 2. In other words, when the weld bead 20 protrudes, Equation 2 may not be satisfied.

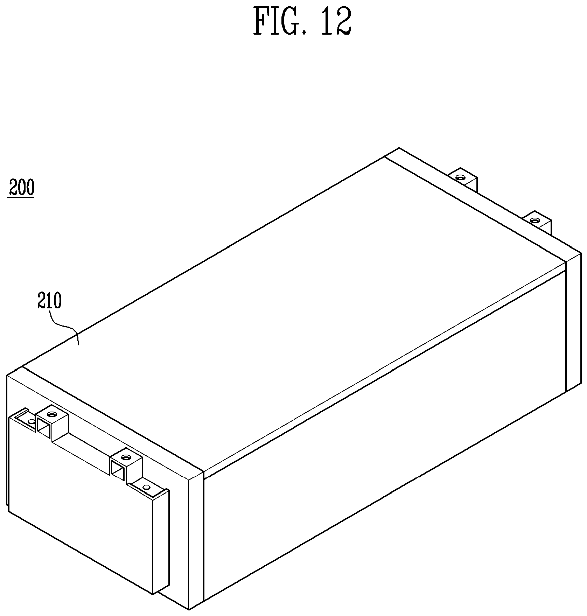

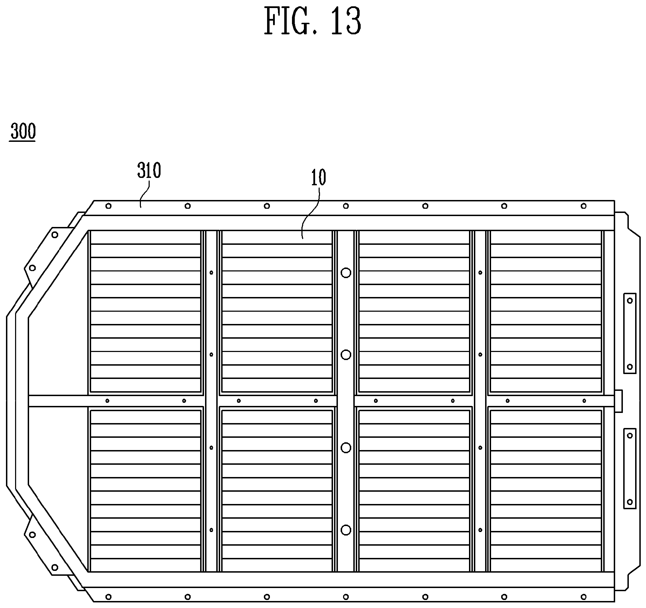

FIGS. 12 and 13 illustrate various embodiments of a battery assembly of the present disclosure.

Other embodiments of the present disclosure may provide a battery assembly including a battery cell as described above. The battery assembly may include a battery cell and an accommodating housing 210 or 310 that accommodates the battery cell therein.

A battery assembly may refer to a battery module in which one or more battery cells are grouped and enclosed in a case to protect the battery cells from external shock, heat, vibration, etc., and to provide high-power and high-capacity characteristics.

In other embodiments, the battery assembly 100 may refer to a battery pack in which one or more battery cells or battery modules are grouped.

Referring to FIG. 12, a battery module 200 may include battery cells 10 and a module housing 210. The module housing 210 may house the battery cells 10 therein. Accordingly, the battery cells 10 may be safely protected from external impact.

Referring to FIG. 13, a battery pack 300 may include battery cells 10 and a pack housing 310. The battery cells 10 may be located on the pack housing 310, and multiple groups of battery cells 10 may provide high-capacity and high-power characteristics.

The battery pack 300 may be formed in a cell-to-pack structure. The cell-to-pack structure enables the battery cells 10 to be housed directly in the pack housing 310. Accordingly, the battery pack is lightweight and has improved energy density.

In other embodiments, the battery cells 10 may be grouped to form a battery module, and the battery module may be located on the pack housing. The shape of the pack housing is not particularly limited as long as multiple groups of battery cells can be electrically connected to the outside.

The present disclosure may be practiced in various forms, and the scope of the disclosure is not limited to the foregoing embodiments. Therefore, if a modified embodiment includes the components of the appended claims according to the present disclosure, it should be considered to fall within the scope of the disclosure.

**Claims**

1. A method for manufacturing a battery cell that comprises a body unit configured to accommodate a battery cell therein and comprising an opening that is open at one side; and a cap unit configured to cover the opening, comprising a bottom surface facing the battery cell and a top surface facing outward, and comprising a recess formed by recessing at least a portion of an edge of the top surface, the method comprising:

   an insertion step of inserting the cap unit into the opening; and
   a connection step of connecting the cap unit and the body unit by irradiating the cap unit and the body unit with laser,
   wherein, in the connection step,
   a weld bead is formed connecting the cap unit and the body unit, and
   the weld bead satisfies Equation 1 below.

   (Equation 1)

   $$T \leq D$$

   (In Equation 1, D denotes a thickness of the weld bead based on a cross-section of the battery cell in a thickness direction of the cap unit, and T denotes a thickness of the cap unit).

2. The method of claim 1, wherein, in the connection step,
   the weld bead is located inward of an outer surface of the body unit and inward of the top surface.

3. The method of claim 1, wherein, in the connection step,

   Equation 2 below is satisfied.

   (Equation 2)

   $$B \leq A \leq 4B$$

   (In Equation 2, A denotes a cross-sectional area of the weld bead based on a cross-section of the battery cell in the thickness direction of the cap unit, and B denotes a cross-sectional area of a corner region formed by the outer surface of the body unit, the top surface, and the weld bead).

4. The method of claim 3, wherein
   the A is 1.5B to 3.5B.

5. The method of claim 1, wherein, in the insertion step,

   Equation 3 below is satisfied.

   (Equation 3)

   $$F \leq P/Q$$

   (In Equation 3, F denotes an overlap length in which the recess and the body unit overlap along the thickness direction of the cap unit with respect to the cross-section of the battery cell in the thickness direction of the cap unit, and P denotes a cross-sectional area of the recess, and Q denotes a thickness of the body unit).

6. The method of claim 1, wherein the recess comprises a step formed along the thickness direction of the cap unit.

7. The method of claim 6, wherein the step has a width of 0.3 mm to 1 mm and a height of 0.2 mm or less.

8. The method of claim 1, wherein the recess has a sloped surface along the thickness direction of the cap unit.

9. The method of claim 1, wherein the body unit comprises a stopper formed along an inner surface thereof to come into contact with the bottom surface of the cap unit.

10. A battery cell comprising:

    a body unit configured to accommodate a battery cell therein and comprising an opening that is open at one side; and a cap unit configured to cover the opening by being inserted at least partially into the opening,

wherein the body unit and the cap unit are connected to each other by a weld bead, and the weld bead satisfies Equation 1 below.

(Equation 1)

$$T \leq D$$

(In Equation 1, D denotes a thickness of the weld bead based on a cross-section of the battery cell in a thickness direction of the cap unit, and T denotes a thickness of the cap unit).

11. The battery cell of claim 10, wherein the weld bead is located inward of an outer surface of the body unit and inward of the top surface of the cap unit.

12. The battery cell of claim 11, wherein

the weld bead satisfies Equation 2 below.

(Equation 2)

$$B \leq A \leq 3.5B$$

(In Equation 2, A denotes a cross-sectional area of the weld bead based on a cross-section of the battery cell in the thickness direction of the cap unit, and B denotes a cross-sectional area of a corner region formed by the outer surface of the body unit, the top surface, and the weld bead).

13. The battery cell of claim 12, wherein the A is 1.5B to 3B.

14. The battery cell of claim 10, wherein the cap unit comprises a different material from the body unit.

15. The battery cell of claim 10, wherein the body unit comprises a stopper formed along an inner surface thereof to come into contact with the bottom surface of the cap unit.

16. A battery assembly comprising:

the battery cell of claim 10, and an accommodating housing configured to accommodate the battery cells therein.

# FIG. 1

```
        ┌─────────────┐
        │    Start     │
        └──────┬───────┘
               │
               ▼
   ┌───────────────────────┐
   │    Insertion step     │──S10
   └───────────┬───────────┘
               │
               ▼
   ┌───────────────────────┐
   │   Connection step     │──S30
   └───────────┬───────────┘
               │
               ▼
        ┌─────────────┐
        │     End      │
        └─────────────┘
```

# FIG. 2

# FIG. 3

# FIG. 4

10_1

13_1

12_1

14_1

Z

Y

X

# FIG. 5

13_1

131_1

12_1

14_1

Z

Y

X

# FIG. 6A

# FIG. 6B

EP 4 773 363 A1

FIG. 7A

18

# FIG. 7B

# FIG. 8

# FIG. 9

# FIG. 10A

# FIG. 10B

# FIG. 10C

# FIG. 10D

# FIG. 10E

# FIG. 11

| | A | B | A/B |
|---|---|---|---|
| First embodiment | 0.39 | 0.56 | 0.70 |
| Second embodiment | 0.61 | 0.39 | 1.56 |
| Third embodiment | 0.91 | 0.29 | 3.1 |
| Fourth embodiment | 0.82 | 0.25 | 3.36 |
| Fifth embodiment | 0.79 | 0.18 | 4.39 |

# FIG. 12

200

210

FIG. 13

300

310     10

## INTERNATIONAL SEARCH REPORT

| | International application No. |
|---|---|
| | **PCT/KR2024/011128** |

### A. CLASSIFICATION OF SUBJECT MATTER

**H01M 50/169**(2021.01)i; **H01M 50/148**(2021.01)i; **H01M 50/15**(2021.01)i; **H01M 50/209**(2021.01)i

According to International Patent Classification (IPC) or to both national classification and IPC

### B. FIELDS SEARCHED

Minimum documentation searched (classification system followed by classification symbols)

H01M 50/169(2021.01); H01M 10/04(2006.01); H01M 2/02(2006.01); H01M 50/103(2021.01); H01M 50/147(2021.01); H01M 50/178(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 바디(body), 캡(cap), 용접(weld), 비드(bead)

### C. DOCUMENTS CONSIDERED TO BE RELEVANT

| Category* | Citation of document, with indication, where appropriate, of the relevant passages | Relevant to claim No. |
|---|---|---|
| Y | CN 217468602 U (SHANGHAI LANJUN NEW ENERGY TECHNOLOGY CO., LTD.) 20 September 2022 (2022-09-20)<br>See claims 1-10 and figures 1-3. | 1-16 |
| Y | KR 10-2019-0101122 A (SAMSUNG SDI CO., LTD.) 30 August 2019 (2019-08-30)<br>See paragraphs [0047]-[0048] and figure 4. | 1-16 |
| Y | KR 10-0709874 B1 (SAMSUNG SDI CO., LTD.) 20 April 2007 (2007-04-20)<br>See claim 1 and figure 2. | 9,15 |
| Y | KR 10-2023-0089378 A (SK ON CO., LTD.) 20 June 2023 (2023-06-20)<br>See paragraph [0049]. | 14 |
| A | JP 2017-139096 A (TOYOTA INDUSTRIES CORP.) 10 August 2017 (2017-08-10)<br>See paragraphs [0015]-[0024]. | 1-16 |

☐ Further documents are listed in the continuation of Box C.    ☑ See patent family annex.

| | |
|---|---|
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **06 November 2024** | **07 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/011128**

| Patent document cited in search report | | | Publication date (day/month/year) | Patent family member(s) | | | Publication date (day/month/year) |
|---|---|---|---|---|---|---|---|
| CN | 217468602 | U | 20 September 2022 | None | | | |
| KR | 10-2019-0101122 | A | 30 August 2019 | KR | 10-2567957 | B1 | 16 August 2023 |
| KR | 10-0709874 | B1 | 20 April 2007 | US | 2007-0151590 | A1 | 05 July 2007 |
| KR | 10-2023-0089378 | A | 20 June 2023 | CN | 116264315 | A | 16 June 2023 |
| | | | | US | 2023-0187792 | A1 | 15 June 2023 |
| JP | 2017-139096 | A | 10 August 2017 | None | | | |

Form PCT/ISA/210 (patent family annex) (July 2022)